# DEMANDE DE BREVET EUROPEEN

(11) **EP 0 649 253 A1**
(43) Date de publication de la demande: **19.04.1995**
(21) Numéro de dépôt: 94402304.3
(22) Date de dépôt: 14.10.1994
(51) Int. Cl.: H04N 5/64

(54) **Récepteur de télévision à haut-parleurs intégrés**

(30) Priorité: 18.10.1993 FR 9312378
(71) Demandeur: THOMSON multimedia, 92400 Courbevoie (FR)
(72) Inventeur: Starck, Philippe, F-92402 Courbevoie Cedex (FR)
(74) Mandataire: Ruellan-Lemonnier, Brigitte

(57) **Abrégé**

Récepteur de télévision muni de hautparleurs disposés de façon particulière. Ce récepteur de télévision (1) comporte au moins un haut-parleur (9) situe au niveau du fond (8) d'une cavité (6,7) externe du boîtier (3) dudit récepteur (1) et pratiquée dans au moins une des faces latérales dudit boîtier, ledit fond (8) et ledit haut parleur (9) étant orientés de façon à rayonner le son dudit haut-parleur (9) au moins partiellement vers l'avant dudit récepteur (1) et ledit fond de ladite cavité (6,7) étant disposé proche de la face arrière dudit boîtier (3).

## Description

La présente invention se rapporte à un récepteur de télévision muni d'un ou plusieurs haut-parleurs disposés de façon particulière. L'invention s'applique notamment, mais non uniquement, au cas où l'on désire intégrer les haut-parleurs dans le botier du récepteur dans le but de minimiser la taille de ce dernier.

Diverses dispositions de haut-parleurs sont connues dans l'art antérieur. Parmi celles-ci, on citera la disposition "en oreilles", de part et d'autre de l'écran, permettant un rayonnement directement vers le téléspectateur, la disposition sous l'écran permettant également un rayonnement direct, ainsi que la disposition a rayonnement latéral. Dans ce dernier cas, les haut-parleurs rayonnent latéralement vers la gauche et la droite du récepteur, à travers des orifices pratiqués dans les cotés gauche et droite du boîtier.

Cet art antérieur présente plusieurs inconvénients. Dans les deux premiers cas cités ci-dessus, les haut-parleurs, bien que présentant l'avantage d'un rayonnement direct, présentent également le désavantage d'augmenter sensiblement les dimensions du téléviseur. En effet, si l'on prend comme dimensions minimales de la face avant du récepteur sensiblement les dimensions de l'écran, c'est à dire de la face avant du tube cathodique, ces dimensions minimales ne peuvent être maintenues dans les deux cas cités. Ceci conduit à l'utilisation d'emballages de taille supérieure, ainsi que dans le cas de la disposition en oreilles, à une fragilisation accrue due au dépassement desdites oreilles du corps du boîtier.

Si la troisième disposition citée répond aux désavantages des deux premières, elle amène également un problème d'ordre acoustique, car le rayonnement du son n'est alors plus direct. Dans ce cas, l'environnement de fonctionnement du récepteur prend une importance beaucoup plus grande qu'auparavant, des réflexions contre des objets disposés de chaque coté du téléviseur pouvant entrainer un confort d'écoute réduit. Il en est de même lorsqu'un téléviseur est disposé sur une étagère et entouré d'objets pouvant obstruer les orifices de diffusion du son.

La présente invention a pour but de présenter une disposition de haut-parleurs dans un téléviseur minimisant les inconvénients cités ci-dessus.

L'invention a pour objet un récepteur de télévision, caracterisé en ce qu'il comporte au moins un haut-parleur situé au niveau du fond d'une cavité externe du boîtier dudit récepteur et pratiquée dans au moins une des faces dudit boîtier, ledit fond et ledit haut parleur étant orientés de facon à rayonner le son dudit haut-parleur au moins partiellement vers l'avant dudit récepteur et ledit fond de ladite cavité étant disposé proche de la face arrière dudit boîtier.

De cette facon, la direction du rayonnement peut être facilement choisie autre que latérale. On améliorera sensiblement la composante directe de rayonnement, le son étant projeté au ras du boîtier, de l'arrière vers l'avant de celui-ci. De plus, les aimants des haut-parleurs sont éloignes des bobines de déviation du tube cathodique du récepteur et perturbent donc moins le faisceau d'électrons.

Selon un mode de réalisation particulier, ledit boîtier a sensiblement la forme d'un parallélipipède. Eventuellement, celui-ci présente un rétrécissement vers l'arrière.

Selon un mode de réalisation particulier, ledit récepteur possède deux haut-parleurs disposés dans les coins supérieurs arrières dudit boîtier, lesdites cavités étant pratiquées dans les arêtes latérales supérieures dudit boîtier, le fond desdites cavités étant muni d'orifices disposés en face desdits haut-parleurs.

Selon un mode de réalisation particulier, lesdites cavités sont de moins en moins profondes au fur et à mesure que l'on se rapproche de l'avant du récepteur, de façon à obstruer le moins possible le chemin du son issu du haut-parleur associé.

Selon un mode de réalisation, lesdites cavités ont sensiblement la forme d'une goutte.

Selon un mode de réalisation particulier, lesdites cavités sont pratiquées au niveau des surfaces des cotés gauche et droit ou du dessus dudit boîtier.

Selon un mode de réalisation particulier, l'orientation dudit haut-parleur est réglable par l'utilisateur.

Selon un mode de réalisation particulier, la zone des cavités comportant des orifices de passage du son est solidaire des haut-parleurs et permet de régler l'orientation desdits haut-parleurs de l'extérieur dudit boîtier.

D'autres caractéristiques et avantages de l'invention apparaîtront à travers la description d'un mode de réalisation particulier non limitatif et illustré par les figures jointes parmi lesquelles:
- la figure 1 représente une vue en trois dimensions d'un récepteur de télévision conforme à l'invention et muni de deux haut-parleurs,
- la figure 2 représente une section d'une des cavités, ladite coupe étant faite selon la diagonale A-A du téléviseur représenté à la figure 3, et
- la figure 3, représente la face avant du récepteur et indique la section de la figure 2.

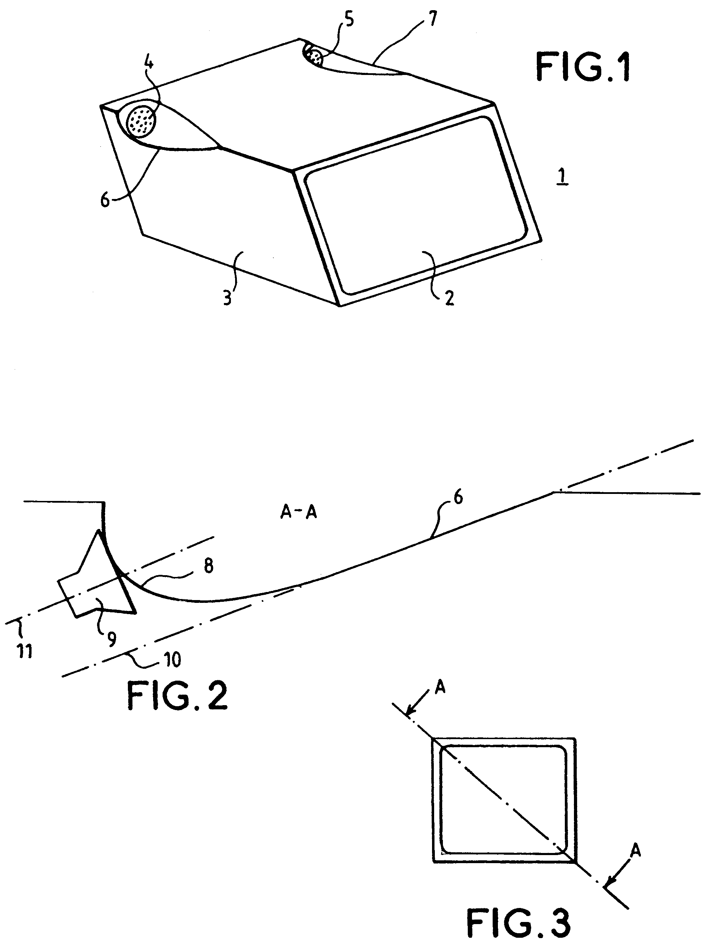

Selon l'exemple de réalisation de la figure 1, un récepteur de télévision 1 comporte un tube cathodique 2, un boîtier 3, des cavités 6 et 7 aménagées au niveau des arêtes latérales supérieures du boîtier 3.

Les cavités 6 et 7 ont, selon le présent mode de réalisation et comme illustré par les figures 1 et 2, une forme de goutte dont la partie arrondie, constituant le fond 8, est disposée vers l'arrière du boîtier 3. Plus on se rapproche de l'avant du boîtier 3, moins la cavité devient profonde, pour finalement rejoindre l'arête correspondante du boîtier. De cette maniere, les cavités et leur contenu restent invisibles quand on ne regarde que la face avant du récepteur. On notera que la longueur et l'inclinaison des cavités 6 et 7 sont limitées principalement par la forme du tube cathodique 2.

Le fond de chaque cavité comporte des orifices délimités par les régions 4 et 5, et destinés a laisser passer le son engendré par les haut-parleurs 9. Les haut parleurs sont, de préférence, fixés immédiatement derrière les régions 4 et 5. La fixation en soi se fait de manière connue de l'homme du métier.

Selon le mode de réalisation illustré par la figure 2, l'axe 11 du haut-parleur est parallèle à la génératrice 10 de la cavité 6, mais d'autres dispositions peuvent être trouvées, selon le type de haut-parleur utilisé. Si l'on desire faire rayonner ledit haut-parleur plutôt vers le dessus de l'appareil, il est également possible de le placer plus en amont du fond de la cavité, les orifices étant placés de manière appropriée. Il est également envisageable de placer plusieurs haut-parleurs par cavité, chaque haut-parleur rayonnant dans une direction différente.

On voit immédiatement sur la figure 1 que la disposition des haut-parleurs derrière les cavités permet d'établir un compromis entre la diffusion latérale et la diffusion directe du son, en minimisant les désavantages associés à ces formules.

Les résultats sont d'autant plus améliorés que les haut-parleurs ne sont pas occultés par le tube cathodique, ou plus généralement par la face avant du récepteur. On disposera donc les haut-parleurs et les fonds des cavités le plus possible vers l'arrière du boîtier et vers les arêtes, ce qui est d'autant plus facilement réalisable que la forme générale du boîtier est celle d'un parallélépipède.

Selon un mode de réalisation particulier, l'inclinaison des haut-parleurs est réglable. Dans ce cas, on peut imaginer que les parties 4 et 5 des cavités 6 et 7 sont solidaires des haut-parleurs et permettent un réglage manuel de l'inclinaison avec un ou deux degrés de liberté sans qu'il soit nécessaire d'ouvrir le boîtier 3.

Selon un autre mode de réalisation, les cavités 6 et 7 sont aménagées non pas au niveau des arêtes latérales du boîtier, mais dans les surfaces des cotés gauche ou droit ou du dessus du boîtier 3.

## Revendications

1. Récepteur de télévision (1) caracterisé en ce qu'il comporte au moins un haut-parleur (9) situé au niveau du fond (8) d'une cavité (6,7) externe du boîtier (3) dudit récepteur (1) et pratiquée dans au moins une des faces dudit boîtier, ledit fond (8) et ledit haut parleur (9) étant orientés de façon à rayonner le son dudit haut-parleur (9) au moins partiellement vers l'avant dudit récepteur (1) et ledit fond de ladite cavité (6,7) étant disposé proche de la face arrière dudit boîtier (3).

2. Récepteur selon la revendication 1, caracterisé en ce que ledit boîtier (3) a sensiblement la forme d'un parallélépipède.

3. Récepteur selon l'une des revendications précédentes, caracterisé en ce qu'il possède deux haut-parleurs (9) disposés dans les coins supérieurs arrières dudit boîtier, lesdites cavités étant pratiquées dans les arêtes latérales supérieures dudit boîtier, le fond (8) desdites cavités (6,7) étant muni d'orifices disposés en face desdits haut-parleurs.

4. Récepteur selon l'une des revendications précédentes, caracterisé en ce que la ou les cavités (6,7) sont de moins en moins profondes au fur et à mesure que l'on se rapproche de l'avant du récepteur, de façon à obstruer le moins possible le chemin du son issu du haut-parleur associé.

5. Récepteur selon l'une des revendications précédentes, caracterisé en ce que la ou lesdites cavités (6,7) ont sensiblement la forme d'une goutte.

6. Récepteur selon l'une des revendications précédentes, caracterisé en ce que la ou lesdites cavités sont pratiquées au niveau des surfaces des cotés gauche et droit ou du dessus dudit boîtier.

7. Récepteur selon l'une des revendications précédentes, caracterisé en ce que l'orientation d'un haut-parleur est réglable par l'utilisateur.

8. Récepteur selon l'une des revendications précédentes, caracterisé en ce que la zone (4,5) de la ou des cavités derrière laquelles est ou sont situés des haut-parleurs est munie d'orifices destinés à laisser passer le son.

9. Récepteur selon la revendication 8, caracterisé en ce que ladite zone (4,5) comportant des orifices est solidaire des haut-parleurs et permet de régler l'orientation desdits haut-parleurs de l'extérieur dudit boîtier.
